# EUROPEAN PATENT APPLICATION

(11) **EP 3 449 778 A1**
(43) Date of publication of application: **06.03.2019**
(21) Application number: 17789675.0
(22) Date of filing: 27.04.2017
(51) Int. Cl.: A47J 27/10, H05B 6/12

(54) **COOKING DEVICE**

(30) Priority: 28.04.2016 WO PCT/JP2016/063369
(71) Applicant: Daisaku Shoji Ltd., Tokyo 100-0011 (JP)
(72) Inventor: DAISAKU, Ippei, Tokyo 100-0011 (JP)
(74) Representative: AWA Sweden AB
(86) International application number: PCT/JP2017/016784
(87) International publication number: WO 2017/188394

(57) **Abstract**

A cooking apparatus usable for vacuum cooking has a casing 105, a heating part 110 for heating water in a cooking utensil 190 provided on the casing 105 by electromagnetic or electric power, a measuring unit 150 having a measuring part 120 for measuring a temperature of the water in the cooking utensil 109, and an adjusting part 130 for adjusting a temperature of the heating part 110 based on a measurement result by the measuring part 120.

## Description

### Technical Field

The present invention relates to a suction member and a cooking kit used for cooking in a decompressed state, and a cooking apparatus that enables cooking using the cooking kit.

### Background Art

Conventionally, it has been proposed to cook food materials in a decompressed state. In the conventional aspect, the entire apparatus is vacuumed and cooking is performed in that state. For example, JP 2007-225204 A proposes an apparatus having a casing, a heating means for providing heat to a food material in the casing, and a suction means for making the interior of the casing negative in pressure.

However, when vacuuming the entire apparatus in this manner, not only the apparatus is increased in size but also the price as a product is increased. For this reason, it is difficult to easily cook food materials in a decompressed state (perform vacuum cooking). Thus, vacuum cooking in general households is not very popular at present.

In addition, JP 2005-106376 A is known as an apparatus that uses steam as vacuum cooking, and an apparatus that performs high-temperature wave heating is known from JP H06-241465 A. However, in a case of using steam or high-temperature wave heating, the apparatus configuration becomes large, parts used for the apparatus become expensive, and as a result, the selling price becomes high. For this reason, it is still difficult to use vacuum cooking easily in general households.

### Summary of Invention

### Technical Problem

The present invention has been made in view of these points, and provides a cooking apparatus capable of cooking food materials in a decompressed state, at low cost.

### Solution to Problem

A cooking apparatus according to the present invention is usable for vacuum cooking the cooking apparatus may comprise:
a casing;
a heating part for heating water in a cooking utensil provided on the casing by electromagnetic or electric power;
a measuring unit having a measuring part for measuring a temperature of the water in the cooking utensil; and
an adjusting part for adjusting a temperature of the heating part based on a measurement result by the measuring part.

In the cooking apparatus according to the present invention,
the measuring unit may have a fixing part for fixing a position with respect to the cooking utensil.

In the cooking apparatus according to the present invention,
the fixing part may be a clamping part that clamps a side face of the cooking utensil.

The cooking apparatus, according to the present invention, may further comprise a circulation part for circulating the water in the cooking utensil.

In the cooking apparatus according to the present invention,
the measuring unit may have a circulation part for circulating the water in the cooking utensil.

In the cooking apparatus according to the present invention,
the measuring unit may have a measurement main body having a vertically elongated shape, and
the measuring part and the circulation part may be provided in a vicinity of a bottom face of the measurement main body.

In the cooking apparatus according to the present invention,
a bag holding part for holding a bag, containing a food material and being in a decompressed state, in the water in the cooking utensil may be provided.

In the cooking apparatus according to the present invention,
the bag holding part may have a suction member holding part for holding a suction member used for decompressing the bag containing the food material.

In the cooking apparatus according to the present invention,
the bag holding part and the measuring unit may be connectable.

The cooking apparatus, according to the present invention, may further comprise a setting part for setting temperature adjusted by the adjusting part, wherein
a scale of setting temperature by the setting part in a range of from 40 to 80 degrees may be smaller than the scale of setting temperature in a range exceeding 80 degrees.

In the cooking apparatus according to the present invention,
the measuring unit and the casing may be connected by a connecting part,
the connecting part may be connected in a vicinity of a top face of the measuring unit, and
a measurement result by the measuring part may be sent to the adjusting part via the connecting part.

In the cooking apparatus according to the present invention,
the temperature of the water may be controllable in 0.5-degree scale.

### Advantageous Effects of Invention

According to the present invention, the temperature of water put in a cooking utensil is measured, and the temperature of the heating part is adjusted according to the result. Therefore, unlike JP 2005-106376 A in which steam is used for cooking and JP H06-241465 A in which high-temperature wave heating is performed, the apparatus configuration is simplified and food materials in a decompressed state can be cooked properly, at low cost. As a result, it can be expected to promote the use of vacuum cooking in general households.

### Brief Description of Drawings

Fig. 1(a) is a view illustrating a bag and a suction member according to a first embodiment of the present invention, and Fig. 1(b) is a view of the suction member attached to the bag according the first embodiment of the present invention.
Fig. 2 is a side view illustrating a first member and a second member used in the first embodiment of the present invention, in a separated state.
Fig. 3 is a side view illustrating the first member and the second member used in the first embodiment of the present invention attached to the bag.
Fig. 4 is a side view illustrating the further detailed structure of the first member and the second member used in the first embodiment of the present invention, in a separated state.
Fig. 5 is a side view illustrating the further detailed structure of the first member and the second member used in the first embodiment of the present invention, in a state of being attached to the bag.
Fig. 6(a) is an upper plan view illustrating a first aspect of an opening/closing part of the second member used in the first embodiment of the present invention, and Fig. 6(b) is an upper plan view illustrating a second aspect of the opening/closing part of the second member used in the first embodiment of the invention.
Fig. 7 is a side view illustrating a third aspect of the opening/closing part of the second member used in the first embodiment of the present invention.
Fig. 8 is a side view illustrating a sucking member used in the first embodiment of the present invention.
Fig. 9 is a view illustrating an external seal member used in the first embodiment of the present invention.
Fig. 10 is a side view illustrating a cooking apparatus that can be used in the first embodiment of the present invention.
Fig. 11(a) is a side view of the bag in a decompressed state, and Fig. 11(b) is a side view of the bag not in a decompressed state.
Fig. 12 is a side view illustrating an example of a cooking apparatus that can be used in a second embodiment of the present invention.
Fig. 13 is a side view illustrating a measuring unit used in the second embodiment of the present invention.
Fig. 14 is a side view illustrating another example of the cooking apparatus that can be used in the second embodiment of the present invention.
Fig. 15 is a side view illustrating a bag holding part used in the second embodiment of the present invention.
Fig. 16 is a side view illustrating still another example of the cooking apparatus that can be used in the second embodiment of the present invention.

### Description of Embodiments

### First Embodiment

### <<Configuration>>

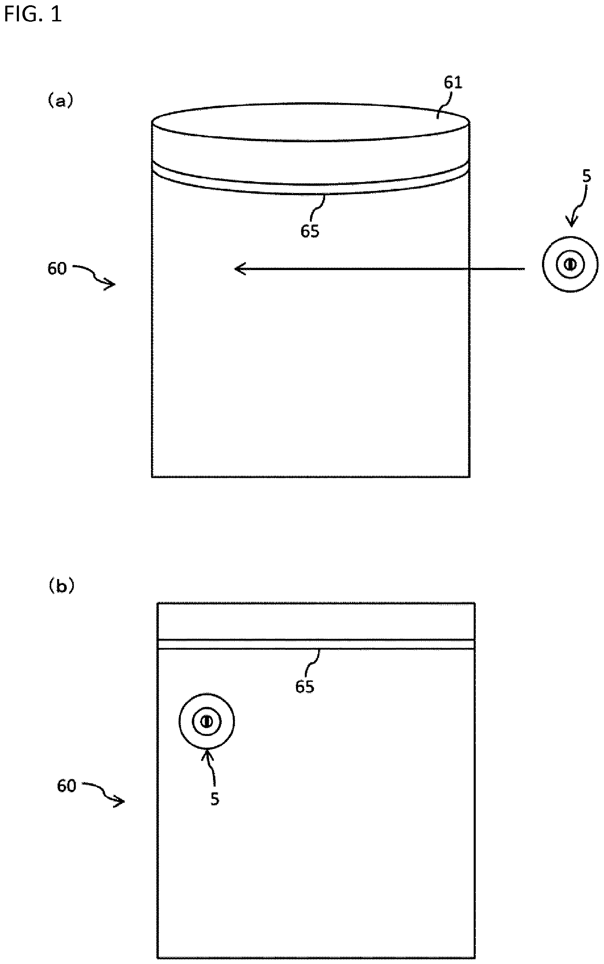

Hereinafter, a first embodiment of a cooking kit, a suction member, and a cooking apparatus according to the present invention will be described with reference to the drawings. Here, Figs. 1 to 11 are views for describing the embodiment of the present invention. Note that, in the present embodiment, cooking in a decompressed state is also referred to as "vacuum cooking".

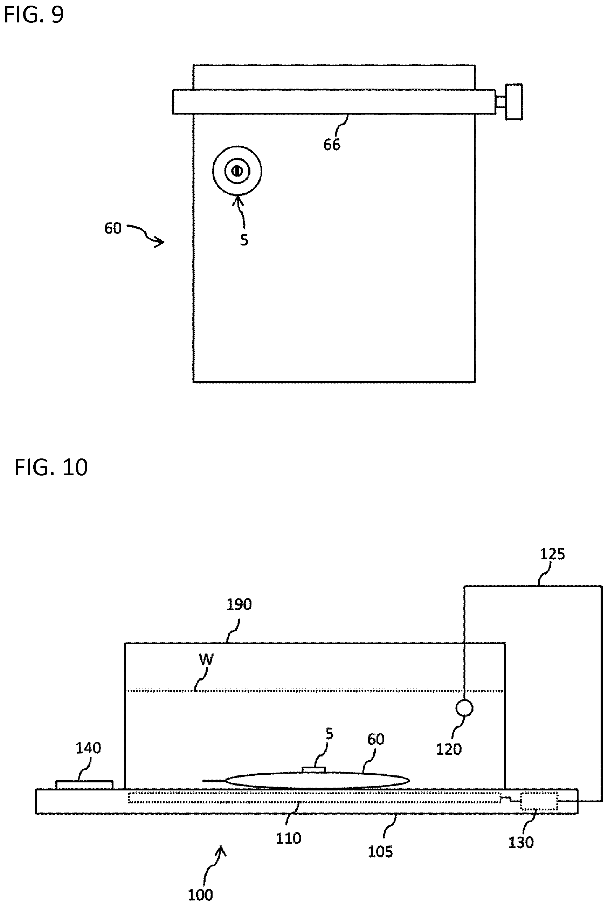

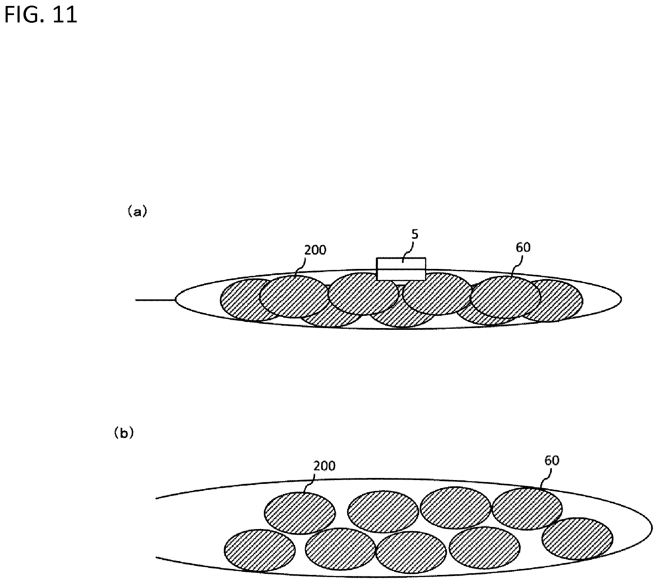

As illustrated in Fig. 1, the cooking kit of the present embodiment has a bag 60 having an aperture 61 for inputting a food material 200 (see Fig. 11), and a suction member 5. The suction member 5 can be attached to the bag 60. More specifically, the suction member 5 can be attached anywhere on the surface of the bag 60. The bag 60 has a sealing part 65, and the aperture 61 may also be sealed by the sealing part 65. The present invention is not limited to such an aspect, and the aperture 61 may also be sealed by using an external seal member 66 (see Fig. 9). Note that the sealing part 65 may be of a zipper type, a fastener type, or a heat seal type.

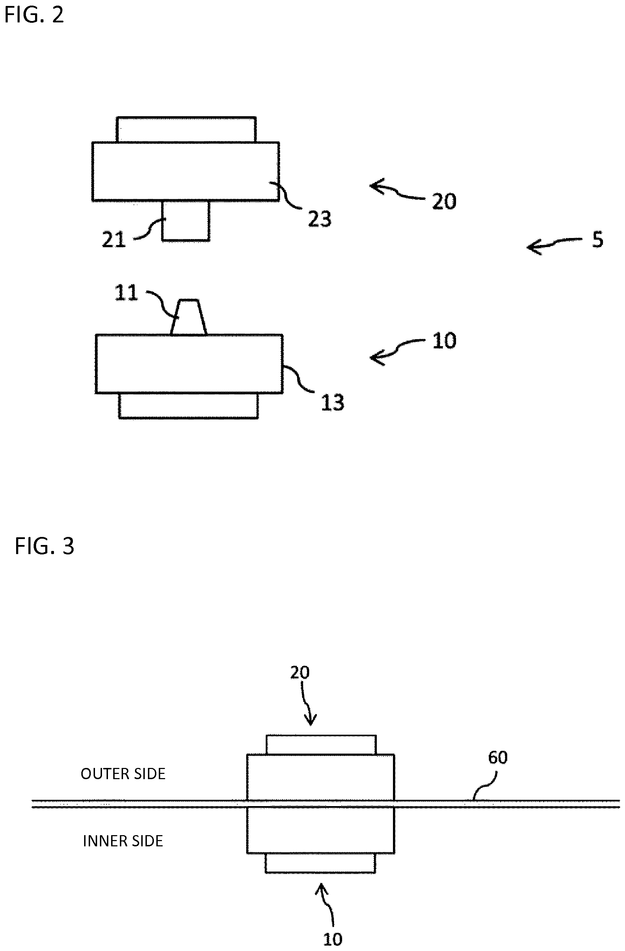

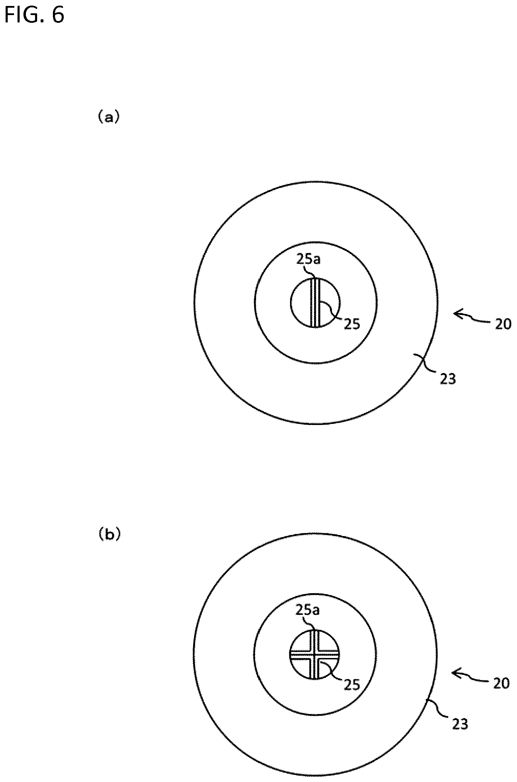

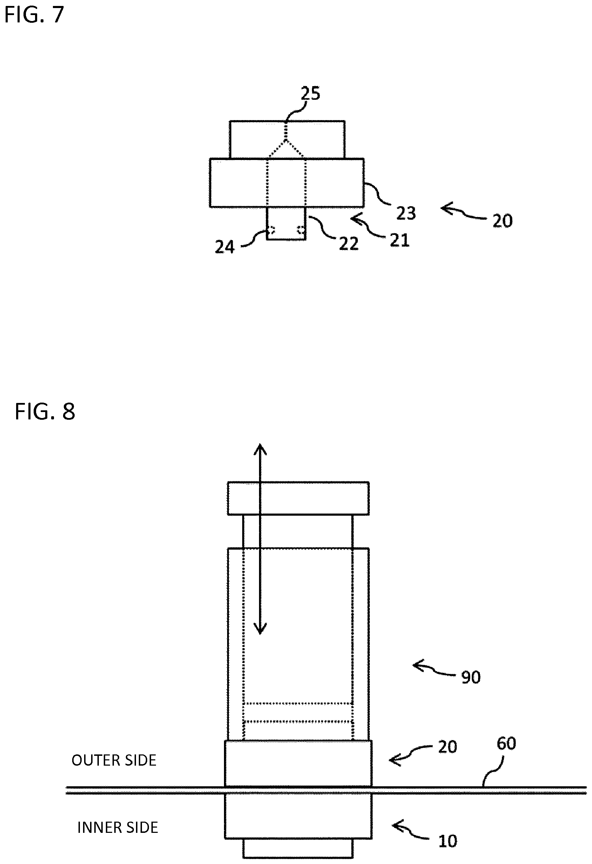

As illustrated in Figs. 2 and 3, the suction member 5 according to the present embodiment has a first member 10 attached to the inner face of the bag 60 and a second member 20 attached to the outer face of the bag 60. By fitting the first member 10 with the second member 20, a hole is formed in the bag 60. The first member 10 or the second member 20 has an opening/closing part 25 (see Fig. 6), and when a negative pressure equal to or lower than a second threshold is applied from the outside on the second member 20 side, the opening/closing part 25 is opened, so that gas in the bag 60 can escape. In addition, when a pressure equal to or higher than a first threshold value is applied from the inside on the first member 10 side, the opening/closing part 25 is opened and the gas in the bag 60 can also escape, so that the food material 200 can be cooked with heat in the bag 60. A sucking member 90 such as illustrated in Fig. 8 can be attached to the second member 20, and the gas in the bag 60 can be sucked by the sucking member 90 via the opening/closing part 25 (in the opened state). As the sucking member 90, for example, a manual pump or an automatic pump can be used. Incidentally, the present embodiment is described using an aspect in which the opening/closing part 25 is provided on the second member 20; however, the present invention is not limited thereto, and an opening/closing part may be provided on the first member 10, and as an example, an opening/closing part may be provided at the tip of a penetration part 11.

Note that the first threshold and the second threshold may be the same value, or the first threshold may be larger than the second threshold.

As illustrated in Fig. 2, the first member 10 may have the penetration part 11, and a first circumference part 13 provided on the outer circumference of the penetration part 11. The second member 20 may have an insertion part 21 into which the penetration part 11 is inserted, and a second circumference part 23 provided on the outer circumference of the insertion part 21 The penetration part 11 may be harder than the first circumference part 13. The insertion part 21 may be harder than the second circumference part 23. When the penetration part 11 is provided, a hole is formed in the bag 60 by the penetration part 11. Such an aspect in which the hole is formed in the bag 60 by the penetration part 11 is adopted, so that the hole formed in the bag 60 can be made small and the decompressed state of the bag 60 can be more reliably maintained.

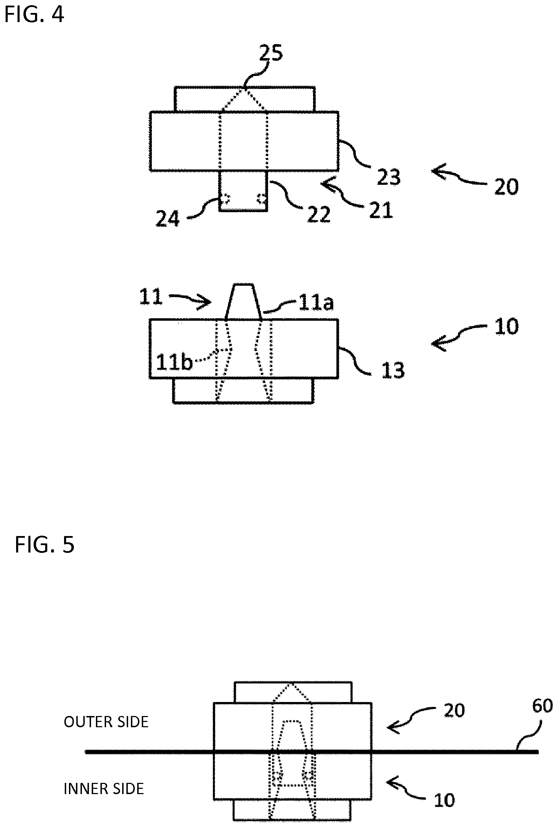

As illustrated in Fig. 4, the penetration part 11 may have a tapered tip. Adoption of such an aspect is advantageous in that the hole can be easily formed in the bag 60 by the penetration part 11. As illustrated in Fig. 4, the penetration part 11 may have a bulging part 11a expanding outward and a narrow part 11b provided on the proximal end side of the bulging part 11a. The insertion part 21 may have a protrusion 24 that abuts on the narrow part 11b and is caught by the bulging part 11a. Adoption of such an aspect enables the penetration part 11 inserted in the insertion part 21 to be less likely to come off (see Fig. 5).

As an example, the penetration part 11 and the insertion part 21 may be made of a plastic material (including an engineering plastic material), and the first circumference part 13 and the second circumference part 23 may be made of an elastic material such as a rubber material. For example, nylon can be used as the plastic material, and silicone rubber, for example, can be used as the rubber material.

As illustrated in Fig. 4, the opening/closing part 25 may be provided at the tip of the insertion part 21. More specifically, the opening/closing part 25 made of the elastic material may be provided at the tip of the insertion part 21 made of the plastic material. In this aspect, the insertion part 21 has a main body 22 made of the plastic material, and the opening/closing part 25 provided at the tip of the main body 22 and made of the elastic material.

As illustrated in Fig. 6(b), the opening/closing part 25 may have a slit 25a cut in a cross shape, or may have a slit 25a cut in a straight line as illustrated in Fig. 6(a). Furthermore, as illustrated in Fig. 7, the opening/closing part 25 may be in a closed state by contacting a member made of an elastic material having a certain length. Also in this case, when a pressure equal to or higher than the first threshold is applied from the inside on the first member 10 side, the gas in the bag 60 escapes via the opening/closing part 25 (in the opened state), and even when a negative pressure equal to or lower than the second threshold is applied from the outside on the second member 20 side, the gas in the bag 60 escapes via the opening/closing part 25.

The bag 60 may be made of, for example, polyethylene. In addition, the bag 60 may have a vacuum preservation function. As an example of this case, the bag 60 may have a two-layer structure of polyethylene and nylon.

As illustrated in Fig. 10, a cooking apparatus 100 used in the present embodiment has: a casing 105 having a placing face on which an subject to be cooked or a cooking utensil 190 such as a cooking pot with the subject to be cooked put therein is placed; a heating part 110 that is provided in the casing 105 and performs heating by electromagnetic or electric power; a measuring part 120 that is directed to the outside of the casing 105 and measures the temperature of the subject to be cooked or the temperature of an medium W such as water (also including hot water) put in the cooking utensil 190 placed on the placing face; and an adjusting part 130 that adjusts the temperature of the heating part 110 based on the measurement result by the measuring part 120. In the present embodiment, description will be made using the cooking kit having the bag 60 and the suction member 5, as the subject to be cooked; however, the present invention is not limited thereto, and the subject to be cooked may be a general food material 200. By the heating part 110 provided in the casing 105, the water in the cooking utensil 190 can be entirely controlled with heat. Therefore, the temperature of the water in the cooking utensil 190 can be precisely controlled, and for example, even temperature control in 0.5-degree scale can also be made.

Note that the measuring part 120 and the adjusting part 130 may be connected by a connecting part 125 having plasticity.

A setting part 140 for setting temperature adjusted by the adjusting part 130 may be provided. In addition, the scale of setting temperature by the setting part 140 in the range of from 40 to 80 degrees (°C) may be smaller than the scale of setting temperature in the range exceeding 80 degrees. As an example, the temperature may be adjusted in scale of 0.5 to 2 degrees (typically in scale of 1 degree) at 40 to 80 degrees, and the temperature may be adjusted in scale of 3 to 5 degrees in the range exceeding 80 degrees. Furthermore, at 50 to 65 degrees that are considered preferable for low-temperature vacuum cooking of meat, the temperature may be set in units of 1 degree or less (for example, 0.5-degree scale).

### <<Functions and Effects>>

Next, among functions and effects according to the present embodiment including the above-described configuration, those not yet described will be mainly described. Note that aspects described in "Functions and Effects" can also be applied in the above "Configuration".

According to the present embodiment, the sucking member 90 can be attached to the second member 20, and the gas in the bag 60 can be sucked by the sucking member 90, so that the inside of the bag 60 that is used for cooking can be easily brought into a decompressed state (see Figs. 11(a) and (b)). Fig. 11(a) is a view illustrating a bag 60 in the decompressed state, and Fig. 11(b) is view illustrating the bag 60 not in the decompressed state. Furthermore, when a pressure equal to or higher than the first threshold is applied from the inside on the first member 10 side, the gas in the bag 60 can escape; therefore, even when moisture included in the food material 200 evaporates due to heat, the gas in the bag 60 can be appropriately discharged outward and the possibility that the bag 60 will rupture can be eliminated in advance. In this regard, it is particularly advantageous when a food material 200 that is high in moisture or includes liquid is cooked.

Furthermore, according to an aspect in which the manual pump is used as the sucking member 90 (see Fig. 8), it is advantageous in that even the food material 200 including liquid can be cooked. That is, in the case of using the manual pump, even when the manual pump sucks the liquid, the possibility of the manual pump being broken is extremely low. Therefore, it is advantageous in that a decompressed state can be easily made even for the food material 200 including the liquid.

Incidentally, by performing vacuum cooking, it is possible to evenly infiltrate seasoning into the food material 200 and evenly apply heat thereto. Moreover, since moisture does not escape except for evaporating and escaping from the suction member 5, food using fish, meat, and the like can be plump and juicy. Furthermore, vacuum cooking enables heat to be easily transmitted to the inside of the food material 200, so that it can be firmly cooked with heat even at a low temperature. For example, when the surface of the protein is denatured, heat is not easily transmitted to the inside, but heating at a low temperature enables heat to be transmitted to the inside of the food material 200 before the surface is denatured. Therefore, cooking with heat can be performed without denaturing or destroying the protein.

In a case of adopting an aspect in which the gas in the bag 60 escapes via the opening/closing part 25 (in the opened state) when a negative pressure equal to or lower than the second threshold is applied from the outside on the second member 20 side, and the gas in the bag 60 escapes via the opening/closing part 25 (in the opened state) when a pressure equal to or higher than the first threshold is applied from the inside on the first member 10 side, it is advantageous in that with the simple configuration, the inside of the bag 60 can be brought into a decompressed state by the sucking member 90 and the gas in the bag 60 can escape during vacuum cooking.

As illustrated in Fig. 4, in a case of adopting an aspect in which the first member 10 has the penetration part 11 having a hollow shape and the first circumference part 13 provided on the outer circumference of the penetration part 11, and the second member 20 has the insertion part 21 having a hollow shape into which the penetration part 11 is inserted and the second circumference part 23 provided on the outer circumference of the insertion part 21, with the bag 60 firmly pinched by the first circumference part 13 and the second circumference part 23, the bag 60 is firmly sucked by the sucking member 90 via the penetration part 11 and the insertion part 21 positioned therebetween. Therefore, even when moisture included in the food material 200 evaporates due to heat to generate gas, with the bag 60 firmly pinched by the first circumference part 13 and the second circumference part 23, the gas can be efficiently guided to the outside of the bag 60 by the penetration part 11 and the insertion part 21. In addition, even when the gas or the liquid leaks out from the hole formed in the bag 60, the circumference of the hole can be brought into a sealed state by the first circumference part 13 and the second circumference part 23, so that it is possible to prevent the inside of the bag 60 from being out of the decompressed state and to prevent the liquid coming out from the food material 200 from leaking.

Particularly, an aspect in which the insertion part 21 surrounds the circumference of the penetration part 11 is adopted, so that a path through which the gas flows can have a two-layer structure (see Fig. 5). As a result, the sucking member 90 can firmly suck, and even when moisture included in the food material 200 evaporates due to heat to generate gas, the gas can be more reliably guided to the outside of the bag 60.

When the penetration part 11 is harder than the first circumference part 13 and the insertion part 21 is harder than the second circumference part 23, suction by the sucking member 90 can be performed more efficiently and the gas generated from the food material 200 can be more efficiently guided to the outside of the bag 60. Furthermore, the first circumference part 13 and the second circumference part 23 that are soft can more reliably clamp the bag 60 in the sealed state.

In particular, in a case where the penetration part 11 and the insertion part 21 are made of the plastic material and the first circumference part 13 and the second circumference part 23 are made of the elastic material, suction by the sucking member 90 can be performed more efficiently, and the gas generated from the food material 200 can be guided to the outside of the bag 60, at low cost and efficiently. In addition, since the first circumference part 13 and the second circumference part 23 having elasticity can firmly clamp the bag 60, it is possible to clamp the bag 60 even more securely in the sealed state.

In a case of adopting an aspect in which the opening/closing part 25 is provided at the tip of the insertion part 21 or the penetration part 11, it is only necessary to close the hollowness of the insertion part 21 or the penetration part 11 with the opening/closing part 25, so that a sectional area for providing the opening/closing part 25 can be reduced. Therefore, it is possible to reduce the possibility that gas such as air enters from the outside into the bag 60 that has been sucked by the sucking member 90.

Note that when the bag 60 has a vacuum preservation function, for example, the food material 200 can be preserved for a long period of time in a vacuum state, which is advantageous in that vacuum cooking can be performed as it is when cooking is desired.

According to the cooking apparatus 100 of the present embodiment such as illustrated in Fig. 10, the temperature of the subject to be cooked or the temperature of the medium W such as water (including hot water) put in the cooking utensil 190 can be directly measured by the measuring part 120. Thus, the temperature control can be made based on the accurate temperature. In particular, when vacuum cooking is performed, heat is directly transmitted to the food material 200 because there is no medium such as air. Thus, performing the temperature control based on the accurate temperature is very advantageous for properly cooking the food material 200 with heat. For example, since the temperature at which a protein is denatured is determined according to its type, by heating at a temperature lower than or slightly above the temperature, it is possible to cook the inside well even at a low temperature.

In addition, in a case of adopting an aspect in which the setting part 140 has the scale of setting temperature in the range of from 40 to 80 degrees smaller than the scale of setting temperature in the range exceeding 80 degrees, precise temperature setting in the range of from 40 to 80 degrees can be made, and eventually the food material 200 can be cooked with heat at a more suitable temperature. Since it is often cooked at a low temperature when performing vacuum cooking, it is very advantageous to be able to precisely set the scale of setting temperature in the range of from 40 to 80 degrees in this manner.

### Second Embodiment

A second embodiment of the present invention will be described. In the present embodiment, a cooking apparatus 100 will be described. In the second embodiment, the same members as those in the first embodiment are denoted by the same reference numerals and will be described.

The cooking apparatus 100 of the present embodiment may include a measuring unit 150 having a fixing part for fixing a position with respect to a cooking utensil 190, and a measuring part 120 that measures the temperature of water as a medium W in the cooking utensil 190. The fixing part is, for example, a clamping part 153 that clamps a side face of the cooking utensil 190. More specifically, the fixing part is the clamping part 153 that clamps, from above, a side face of a cooking pot as an example of the cooking utensil 190. The fixing part may be an adsorbing member adsorbed to the inner bottom face or the inner circumferential face of the cooking utensil 190. Only one measuring part 120 may be used, and a plurality of measuring parts 120 may also be used. Only one measuring unit 150 may be used, and a plurality of measuring units 150 may also be used.

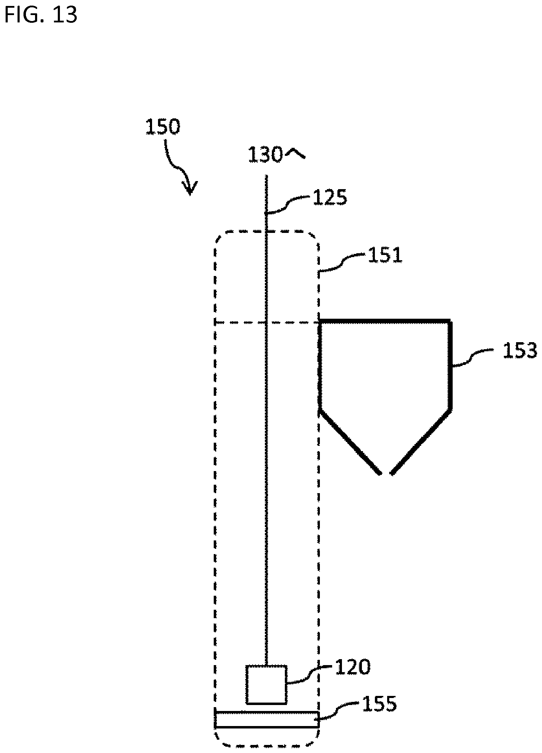

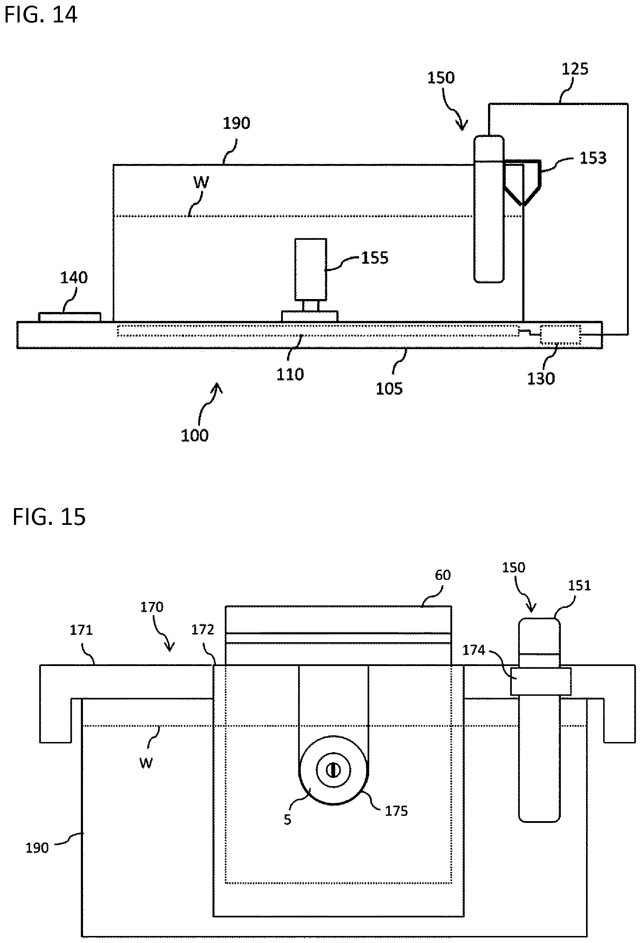

The cooking apparatus 100 may have a circulation part 155 such as a circulation pump, a rotary motor, or the like for circulating the water in the cooking utensil 190. The circulation part 155 may be provided separately from the measuring unit 150 as illustrated in Fig. 14, but may be included in the measuring unit 150 as illustrated in Fig. 13. By providing such a circulation part 155, the temperature of the water in the cooking utensil 190 can be made uniform, and as a result, the temperature of the water in the cooking utensil 190 can be adjusted accurately. As an example, the temperature of the water in the cooking utensil 190 can be controlled in 0.5-degree scale.

As illustrated in Fig. 13, the measuring unit 150 may have a measurement main body 151 having a vertically elongated shape such as a substantially cylindrical shape, a substantially prismatic shape, or the like. The measuring part 120 and the circulation part 155 may be provided in the vicinity of the bottom face of the measurement main body 151. The vicinity of the bottom face of the measurement main body 151 means the lowermost region when the height direction of the measurement main body 151 is equally divided into five. Thus, providing the measuring part 120 and the circulation part 155 in the vicinity of the bottom face means that in the lowermost region when the height direction of the measurement main body 151 is equally divided into five, at least a portion of the measuring part 120 is positioned and at least a portion of the circulation part 155 is positioned. The circulation part 155 in the measurement main body 151 may be driven by receiving electric power from a connecting part 125, or may be driven by a battery housed in the measurement main body 151. In addition, the measuring part 120 and an adjusting part 130 or a heating part 110 may not be connected by a wire such as the connecting part 125, but may be wirelessly connected.

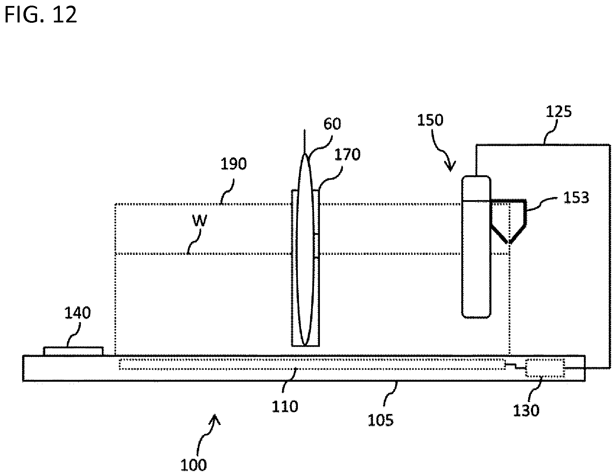

As illustrated in Figs. 12 and 15, for example, a bag holding part 170 such as a rack for holding, in the water in the cooking utensil 190, a bag 60 containing a food material and being in a decompressed state such as described in the first embodiment may be provided. The bag holding part 170 may have a bag holding main body 172 for holding the bag 60, and a pair of arms 171 horizontally extending from the bag holding main body 172 and placed on the top face of the cooking utensil 190.

As illustrated in Fig. 15, the bag holding part 170 may have a suction member holding part 175 for holding a suction member 5 such as described in the first embodiment. For example, the suction member holding part 175 may have a shape corresponding to the outer shape of the suction member 5, and by disposing the suction member 5 in the suction member holding part 175, the bag 60 housing the food material in the decompressed state may be disposed at a determined position.

As illustrated in Fig. 15, the bag holding part 170 and the measuring unit 150 may be connectable. In this case, the measurement main body 151 of the measuring unit 150 may be connected to a measuring unit connection part 174 provided in the bag holding part 170. The measuring unit connection part 174 has, for example, a shape corresponding to the outer shape of the measurement main body 151, and by inserting, for example, from above, the measurement main body 151 into the measuring unit connection part 174, the measuring unit 150 may be connected to the measuring unit connection part 174. In this case, the measuring unit connection part 174 may have an inner circumference (for example, inner diameter) on the lower side smaller than an inner circumference (for example, inner diameter) on the upper side, and the measurement main body 151 may not come out downward.

As illustrated in Fig. 14, the connecting part 125 such as a wire may be connected in the vicinity of the top face of the measuring unit 150 so as not to be immersed in the water in the cooking utensil 190. The vicinity of the top face means the uppermost region when the height direction of the measurement main body 151 is equally divided into five. Thus, providing the connecting part 125 in the vicinity of the top face means that at least a portion of the connecting part 125 is positioned in the uppermost region when the height direction of the measurement main body 151 is equally divided into five.

In a case of adopting an aspect in which the measuring part 120 that measures the temperature of the water in the cooking utensil 190 is provided and the temperature of the heating part is adjusted based on the measurement result by the measuring part 120, the temperature of the water in the cooking utensil 190 can be measured to feed back the measurement result, so that the adjusting part can adjust the temperature of the heating part. In general cooking, the temperature of the water in the cooking utensil 190 such as a cooking pot is not specially measured and feedback control is not performed. Such temperature adjustment is necessary because it is assumed to perform vacuum cooking. That is, as described above, in vacuum cooking, since there is no medium such as air, heat is directly transmitted to a food material 200. Thus, performing the temperature control based on the accurate temperature is very advantageous for properly cooking the food material 200 with heat. The temperature of the water in the cooking utensil 190 may be controllable in 0.5-degree scale, for example.

Furthermore, according to the aspect of the present embodiment, it is advantageous in that vacuum cooking can be performed with the simple configuration. That is, unlike JP 2005-106376 A in which steam is used for cooking and JP H06-241465 A in which high-temperature wave heating is performed, the apparatus configuration can be simplified in the present embodiment, and a food material in a decompressed state can be properly cooked at low cost. In addition, compared to the aspect of the present embodiment, cleaning and maintenance are difficult when steam or high-temperature wave heating is used.

In a case where the fixing part for fixing the position with respect to the cooking utensil 190 is provided, the measuring part 120 can be positioned at a determined position of the cooking utensil 190, which is advantageous in that the influence of change in the temperature measured in the cooking utensil 190 according to the position of the measuring part 120 can be reduced.

In a case of adopting, as the fixing part, the clamping part 153 that clamps the side face of the cooking utensil 190 such as illustrated in Fig. 13, the measuring part 120 can be positioned at a predetermined distance with respect to the side face of the cooking utensil 190 every time, which is advantageous in that the influence of change in the temperature measured in the cooking utensil 190 according to the positional relationship between the measuring part 120 and the side face of the cooking utensil 190 can be further reduced.

In a case where the circulation part 155 for circulating the water in the cooking utensil 190 is provided, the water in the cooking utensil 190 can be made uniform and occurrence of unevenness in the water temperature can be prevented. As a result, it is advantageous in that the difference between the heat applied to the food material that is to be vacuum-cooked and the heat measured by the measuring part 120 can be reduced.

In a case of adopting an aspect in which the circulation part 155 is included in the measuring unit 150, the positional relationship between the measuring part 120 and the circulation part 155 can be determined. Therefore, change in the positional relationship between the circulation part 155 and the measuring part 120 is advantageous in that the influence of change in the temperature measured by the measuring part 120 can be reduced.

In a case of adopting an aspect in which the measurement main body 151 has a vertically-elongated shape and the measuring part 120 and the circulation part 155 are provided in the vicinity of the bottom face of the measurement main body 151, the measuring part 120 and the circulation part 155 can be positioned at a deep position in the cooking utensil 190 without occupying a large region in the horizontal direction. Positioning the measuring part 120 at the deep position is advantageous in that the water temperature can be measured at the deep position where the food material is highly likely to be positioned. By positioning the circulation part 155 at the deep position, the water in the cooking utensil 190 can be circulated from the deep position, which is advantageous in that the temperature of the water in the cooking utensil 190 can be made more uniform. Note that the vertically elongated shape means that the length in the longitudinal direction is three times or more the length in the lateral direction.

In a case of adopting an aspect in which the bag holding part 170 for holding, in the water in the cooking utensil 190, the bag 60 containing the food material in the decompressed state is provided, the positional relationship between the food material and the measuring part 120 can be made to be somewhat constant. Therefore, change in the positional relationship between the food material and the measuring part 120 is advantageous in that the influence of change in the relationship of a difference between the temperature measured by the measuring part 120 and the temperature applied to the food material can be reduced.

As illustrated in Fig. 15, in a case of adopting an aspect in which the bag holding part 170 has the suction member holding part 175 for holding the suction member 5, the positional relationship between the food material and the measuring part 120 can be made more constant. Therefore, change in the positional relationship between the food material and the measuring part 120 is advantageous in that the influence of change in the relationship of a difference between the temperature measured by the measuring part 120 and the temperature applied to the food material can be more reduced. In addition, a position indication for indicating the position to which the suction member 5 is attached may be printed or the like on the bag 60. When such a position indication is made, a user can easily position the suction member 5 at a determined position of the bag 60, which is advantageous in which the position of the bag 60 held by the bag holding part 170 can be easily positioned at the determined position.

As illustrated in Fig. 15, in a case of adopting an aspect in which the bag holding part 170 and the measuring unit 150 are connectable, the positional relationship between the bag holding part 170 and the measuring unit 150 can be made constant. Making thee positional relationship between the bag holding part 170 and the measuring unit 150 constant as described above enables the positional relationship between the food material housed in the bag 60 and the measuring part 120 to make more constant, and change in the positional relationship between the food material and the measuring part 120 is advantageous in that the influence of change in the relationship of a difference between the temperature measured by the measuring part 120 and the temperature applied to the food material can be more reduced. Note that in a case of adopting this aspect, the measuring unit 150 can be positioned with respect to the bag holding part 170, so that the fixing part such as the clamping part 153 may not be provided. However, it is also conceivable that such a suction member holding part 175 is not used by the user; therefore, even in the aspect in which the bag holding part 170 is provided, the fixing part such as the clamping part 153 may be provided.

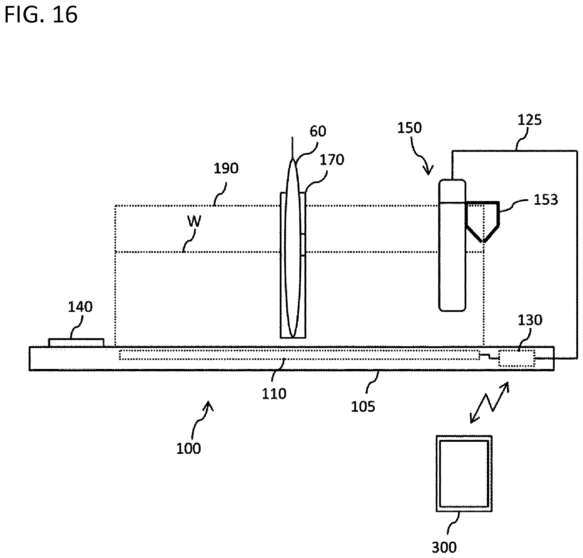

As illustrated in Fig. 16, the adjusting part 130 can communicate with a communication terminal 300 such as a smartphone, a tablet, a personal computer (PC), and the adjusting part 130 may prepare the water temperature by receiving information from the communication terminal 300. That is, depending on the relationship between the cooking temperature and the time based on a recipe stored in the communication terminal 300, or the relationship between the cooking temperature and the time based on a recipe acquired at a site accessible by the communication terminal 300, the adjusting part 130 may be prepared to perform automatic temperature change and temperature adjustment, and the food material may be vacuum-cooked with the water in the cooking utensil 190. Furthermore, the communication terminal 300 may monitor the water temperature measured by the measuring part 120 (possibly at a remote location).

The descriptions of the above-described embodiments and the disclosure of the drawings are merely examples for explaining the invention described in claims, and the invention described in claims is not limited by the description of the above-described embodiments or the disclosure of the drawings.

### Reference Signs List

- 5: Suction member
- 10: First member
- 11: Penetration part
- 13: First circumference part
- 20: Second member
- 21: Insertion part
- 23: Second circumference part
- 25: Opening/closing part
- 60: Bag
- 61: Aperture
- 90: Sucking member
- 105: Casing
- 110: Heating part
- 120: Measuring part
- 130: Adjusting part
- 140: Setting part
- 150: Measuring unit
- 151: Measurement main body
- 153: Clamping part (Fixing part)
- 155: Circulation part
- 170: Bag holding part
- 175: Suction member holding part
- 200: Food material

## Claims

1. A cooking apparatus usable for vacuum cooking comprising:
a casing;
a heating part for heating water in a cooking utensil provided on the casing by electromagnetic or electric power;
a measuring unit having a measuring part for measuring a temperature of the water in the cooking utensil; and
an adjusting part for adjusting a temperature of the heating part based on a measurement result by the measuring part.

2. The cooking apparatus according to claim 1, wherein
the measuring unit has a fixing part for fixing a position with respect to the cooking utensil.

3. The cooking apparatus according to claim 2, wherein
the fixing part is a clamping part that clamps a side face of the cooking utensil.

4. The cooking apparatus, according to any one of claims 1 to 3, further comprising a circulation part for circulating the water in the cooking utensil.

5. The cooking apparatus according to any one of claims 1 to 4, wherein
the measuring unit has a circulation part for circulating the water in the cooking utensil.

6. The cooking apparatus according to claim 5, wherein
the measuring unit has a measurement main body having a vertically elongated shape, and
the measuring part and the circulation part are provided in a vicinity of a bottom face of the measurement main body.

7. The cooking apparatus according to any one of claims 1 to 6, wherein
a bag holding part for holding a bag, containing a food material and being in a decompressed state, in the water in the cooking utensil is provided.

8. The cooking apparatus according to claim 7, wherein
the bag holding part has a suction member holding part for holding a suction member used for decompressing the bag containing the food material.

9. The cooking apparatus according to claim 7 or 8, wherein
the bag holding part and the measuring unit are connectable.

10. The cooking apparatus, according to any one of claims 1 to 9, further comprising a setting part for setting temperature adjusted by the adjusting part, wherein
a scale of setting temperature by the setting part in a range of from 40 to 80 degrees is smaller than the scale of setting temperature in a range exceeding 80 degrees.

11. The cooking apparatus according to any one of claims 1 to 10, wherein
the measuring unit and the casing are connected by a connecting part,
the connecting part is connected in a vicinity of a top face of the measuring unit, and
a measurement result by the measuring part is sent to the adjusting part via the connecting part.

12. The cooking apparatus according to any one of claims 1 to 10, wherein
the temperature of the water is controllable in 0.5-degree scale.
